# EUROPEAN PATENT SPECIFICATION

(11) **EP 0 518 504 B1**
(45) Date of publication and mention of the grant of the patent: **29.07.1998**
(21) Application number: 92304511.6
(22) Date of filing: 19.05.1992
(51) Int. Cl.: G06F 13/40, G06F 13/362

(54) **Personal computer with local bus arbitration**
Personalcomputer mit Lokalbusarbitrierung
Ordinateur personnel avec arbitrage d'un bus local

(30) Priority: 28.05.1991 US 706602
(43) Date of publication of application: 16.12.1992
(73) Proprietor: International Business Machines Corporation, Armonk, N.Y. 10504 (US)
(72) Inventor: Fuoco, Daniel Paul, Boca Raton, Florida 33433 (US); Hernandez, Luis Antonio, Boca Raton, Florida 33427-2103 (US); Mathisen, Eric, Boca Raton, Florida 33486 (US); Moeller, Dennis Lee, Delray Beach, Florida 33444 (US); Raymond, Jonathan Henry, Essex Junction, Vermont 05453 (US); Tashakori, Esmaeil, Delray Beach, Florida 33445 (US)
(74) Representative: Burt, Roger James, Dr.

(56) References cited:
- EP-A- 0 478 148
- WO-A-90/00276
- US-A- 4 470 114
- US-A- 5 083 259

## Description

This invention relates to personal computers, and more particularly to personal computers in which performance is enhanced by enabling arbitration for control over a local processor bus among a plurality of "master" devices coupled directly to the local processor bus.

Personal computer systems in general and IBM personal computers in particular have attained widespread use for providing computer power to many segments of today's modern society. Personal computer systems can usually be defined as a desk top, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a motherboard or system planar to connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55, 65, 70, 80, 90 and 95.

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's MICRO CHANNEL bus architecture exemplified by IBM's In the beginning, the Family I models typically used the popular INTEL 8088 or 8086 microprocessor as the system processor. These processors have the ability to address one megabyte of memory. Later Family I models and the Family II models typically use the higher speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

As personal computer technology has developed and moved from eight to sixteen and eventually thirty two bit wide bus interaction and higher speed microprocessors capable of real and protected mode operation, performance capability has been sought by separating the architecture of the personal computer into varying bus areas. More specifically, in the original IBM PC, what came to be known as the expansion bus was essentially a direct extension of the microprocessor (8086 or 8088) connections, buffered and demultiplexed as required. Later, as the AT bus specification was developed and came into wide use (now being also known as the Industry Standard Architecture or ISA), it became possible to sever the nearly direct connection between the microprocessor and the bus, giving rise to the presence of what became known as the local processor bus and the renaming of the expansion bus as the input/output bus. Typically, in order to enhance performance, the local processor bus runs at a higher clock speed (typically expressed in Hertz) than does the input/output bus. The IBM AT architecture also opened the possibility of running more than one microprocessor on the input/output bus, through use of direct memory access (DMA) interrupts.

As performance enhancement has continued to be sought, difficulties inherent in opening the possibility of multiple masters contending for access to and control of the local processor bus have become apparent, as have the potential benefits of consolidating the functions necessary in operating a personal computer in as few integrated circuit chips as possible.

International patent application WO 90/00276 discloses a personal computer system comprising a high speed data bus, an input/output data bus, master devices coupled directly to said high speed bus and a bus interface controller coupled directly to the high speed bus and directly to the input/output data bus.

Now according to the present invention as it is defined in the appended claims, there is provided a personal computer system comprising; a high speed data bus; an input/output data bus; at least two master devices coupled directly to said high speed bus, and a bus interface controller directly to said high speed bus and directly to said input/output data bus for providing communications between said high speed bus and said input/output data bus, characterised in that said bus interface controller provides for arbitration among said master devices coupled directly to said high speed bus for access to said high speed bus, and provides for arbitration among said high speed bus and any devices coupled directly to said input/output data bus for access to said input/output data bus.

In the drawings:-
Figure 1 is a perspective view of a personal computer embodying this invention;
Figure 2 is an exploded perspective view of certain elements of the personal computer of Figure 1 including a chassis, a cover, and a planar board and illustrating certain relationships among those elements;
Figure 3 is a schematic view of certain components of the personal computer of Figures 1 and 2;
Figure 4 is schematic representation of certain functions achieved by the bus interface controller of Figure 3;
Figure 5 is a signal chart illustrating operation of the bus interface controller in a first operating circumstance; and
Figures 6 through 16 are signal charts similar to Figure 5 illustrating operation of the bus interface controller in other operating circumstances.

### Detailed Description of Invention

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

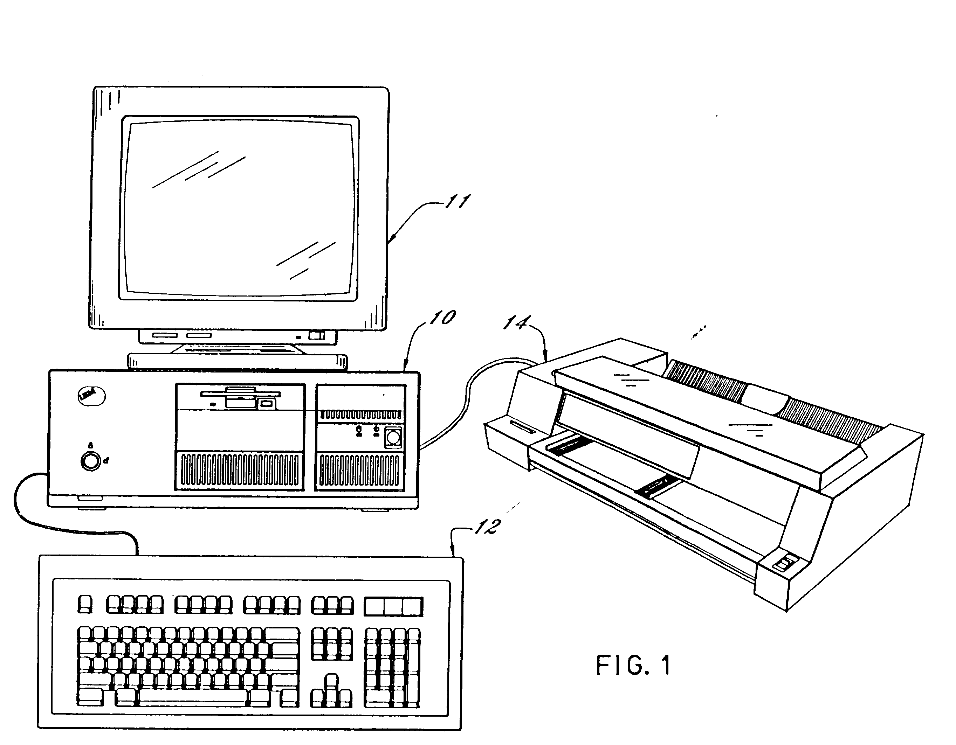

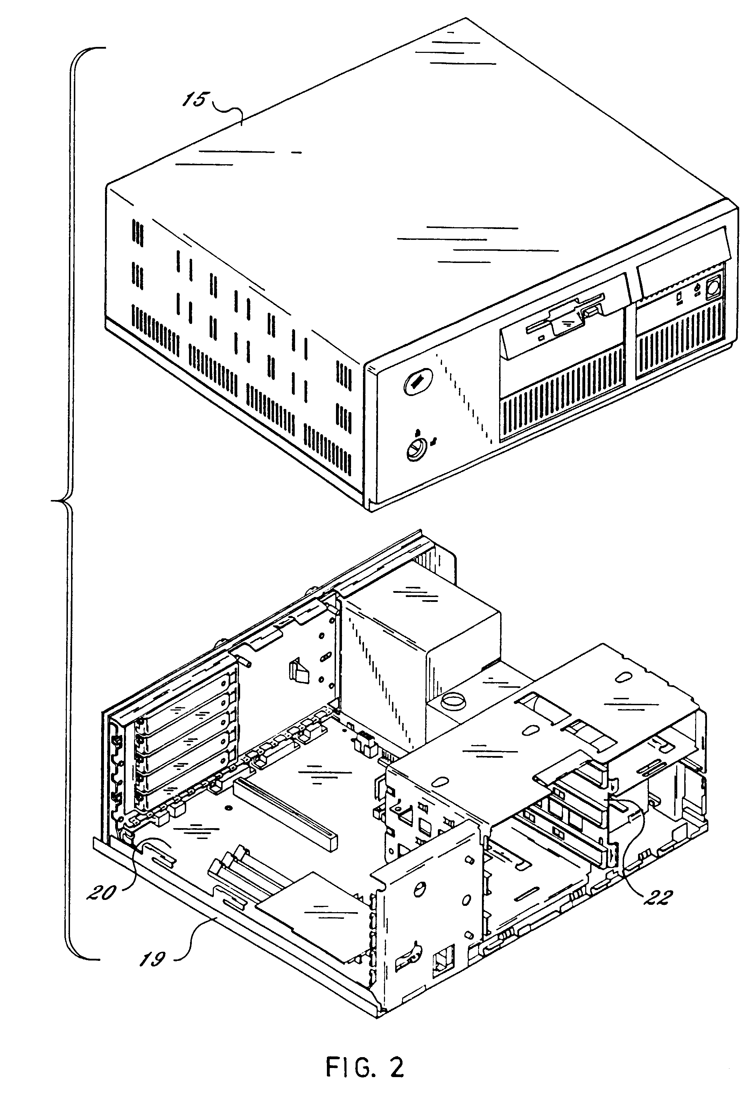

Referring now more particularly to the accompanying drawings, a microcomputer embodying the present invention is there shown and generally indicated at 10 (Figure 1). As mentioned hereinabove, the computer 10 may have an associated monitor 11, keyboard 12 and printer or plotter 14. The computer 10 has a cover 15 which cooperates with a chassis 19 in defining an enclosed, shielded volume for receiving electrically powered data processing and storage components for processing and storing digital data, as shown in Figure 2. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base and a rear panel (Figure 2) and defines at least one open bay for receiving a data storage device such as a disk drive for magnetic or optical disks, a tape backup drive, or the like. In the illustrated form, an upper bay 22 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 22.

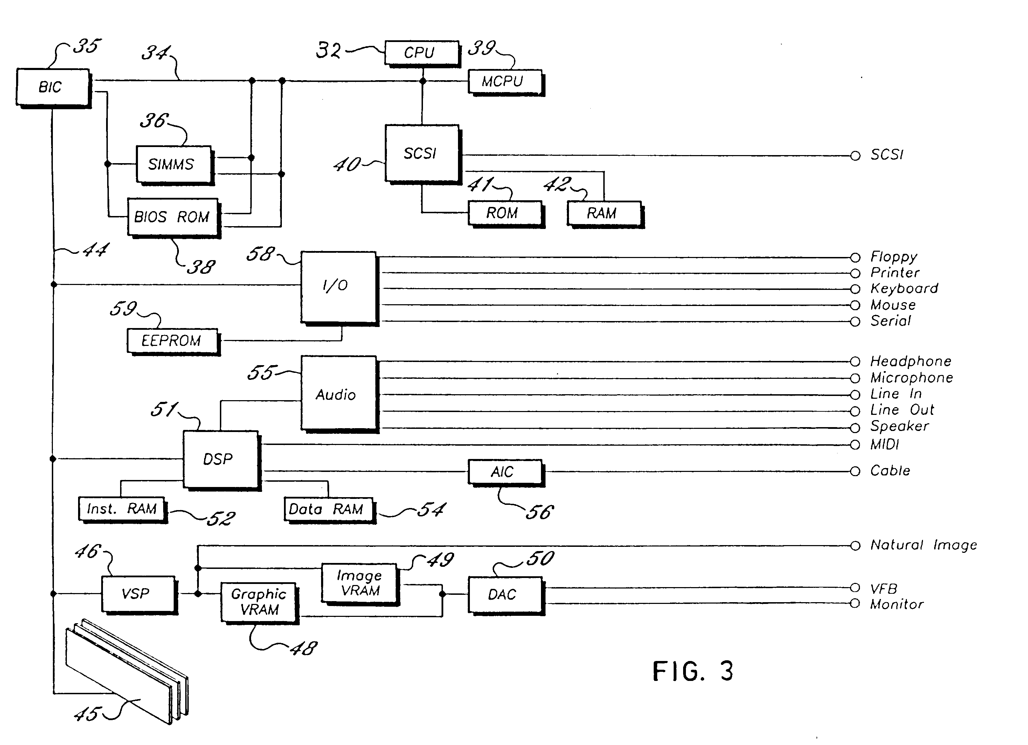

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32. While any appropriate microprocessor can be used as the CPU 32, one suitable microprocessor is the 80386 which is sold by INTEL. The CPU 32 is connected by a high speed CPU local bus 34 to a bus interface control unit 35, to volatile random access memory (RAM) 36 here shown as Single Inline Memory Modules (SIMMs) and to BIOS ROM 38 in which is stored instructions for basic input/output operations to the CPU 32. The BIOS ROM 38 includes the BIOS that is used to interface between the I/O devices and the operating system of the microprocessor 32. Instructions stored in ROM 38 can be copied into RAM 36 to decrease the execution time of BIOS.

While the present invention is described hereinafter with particular reference to the system block diagram of Figure 3, it is to be understood at the outset of the description which follows that it is contemplated that the apparatus and methods in accordance with the present invention may be used with other hardware configurations of the planar board. For example, the system processor could be an Intel 80486 microprocessor.

Returning now to Figure 3, the CPU local bus 34 (comprising data, address and control components) also provides for the connection of the microprocessor 32 with a numeric or math coprocessor 39 and a Small Computer Systems Interface (SCSI) controller 40. The SCSI controller 40 may, as is known to persons skilled in the arts of computer design and operation, be connected or connectable with Read Only Memory (ROM) 41, RAM 42, and suitable external devices of a variety of types as facilitated by the I/O connection indicated to the right in the Figure. The SCSI controller 40 functions as a storage controller in controlling storage memory devices such as fixed or removable media electromagnetic storage devices (also known as hard and floppy disk drives), electro-optical, tape and other storage devices.

The bus interface controller (BIC) 35 couples the CPU local bus 34 with an I/O bus 44 and functions as a protocol translator, memory controller and DMA controller among other functions. By means of the bus 44, the BIC 35 is coupled with an optional feature bus such as a MICRO CHANNEL bus having a plurality of I/O slots for receiving MICRO CHANNEL adapter cards 45 which may be further connected to an I/O device or memory (not shown). The I/O bus 44 includes address, data, and control components. The I/O bus 44 may be configured to bus specifications other than the MICRO CHANNEL specification.

Coupled along the I/O bus 44 are a variety of I/O components such as a video signal processor 46 which is associated with video RAM (VRAM) for storing character based information (indicated at 48) and for storing graphic or image based information (indicated at 49). Video signals exchanged with the processor 46 may be passed through a Digital to Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with a input/output controller 58 with associated Electrical Erasable Programmable Read Only Memory (EEPROM) 59 by which inputs and outputs are exchanged with conventional peripherals including floppy disk drives, a printer or plotter 14, keyboard 12, a mouse or pointing device (not shown), and by means of a serial port.

Before turning in greater detail to a description of the functions served by the BIC 35, it is appropriate to first consider the support by a personal computer of what have been known as multiple masters or bus masters. As here used, a "master" is a processor or any circuit designed to gain control over a bus and drive address, data and control signals on the bus. Having such capability enables a master device to transfer information between system memory and other devices.

It has been proposed that masters be divided among three types -- system master (usually the CPU), DMA controller, and bus master. The system master controls and manages the system configuration. It is usually the default master in the system. The default master owns the bus when no other master requires it. A DMA master is a special type of master which transfers data between DMA slaves and memory slaves, and does not arbitrate for the bus but services the DMA slave that is the arbitrator. As here used, a bus master arbitrates for use of the bus and supports information transfers with an I/O slave or memory slave.

What makes a device a "bus master" can be confusing, as bus masters do not necessarily require a processor. Also, a bus master may be called on to respond as a slave when accessed by another bus master. A bus master is distinguished by the capability of gaining control of the bus through arbitration and controlling the execution of a defined bus cycle. Generally, there are three types of bus masters: full function, special function controllers, and programmable special function controllers. The fundamental differences among them are degrees of flexibility, function and cost. The full function bus master is the most flexible, has the most function, and costs most. Typically, a full function bus master will have its own programmable CPU and be capable of controlling all system resources, including operating system software. Special function controllers have the least flexibility, function and cost. Typically, a special function controller will use logic circuits but no CPU to perform a specific function while requiring little or no assistance from other masters. Programmable special function controllers span the range between the other two. The fundamental difference between special function and programmable special function controllers is the ability to modify the function and/or execution characteristics of the bus master. Such modification can be accomplished through use of processing units or through settable registers.

Within the definitions here given, the CPU 32, MCPU 39, and SCSI controller 40 may all function as masters directly coupled to or on the local bus 34, while the I/O controller 58, DSP 51, VSP 46 and possibly accessory boards 45 mounted in the MICRO CHANNEL slots may all function as masters directly coupled to or on the input/output bus 44.

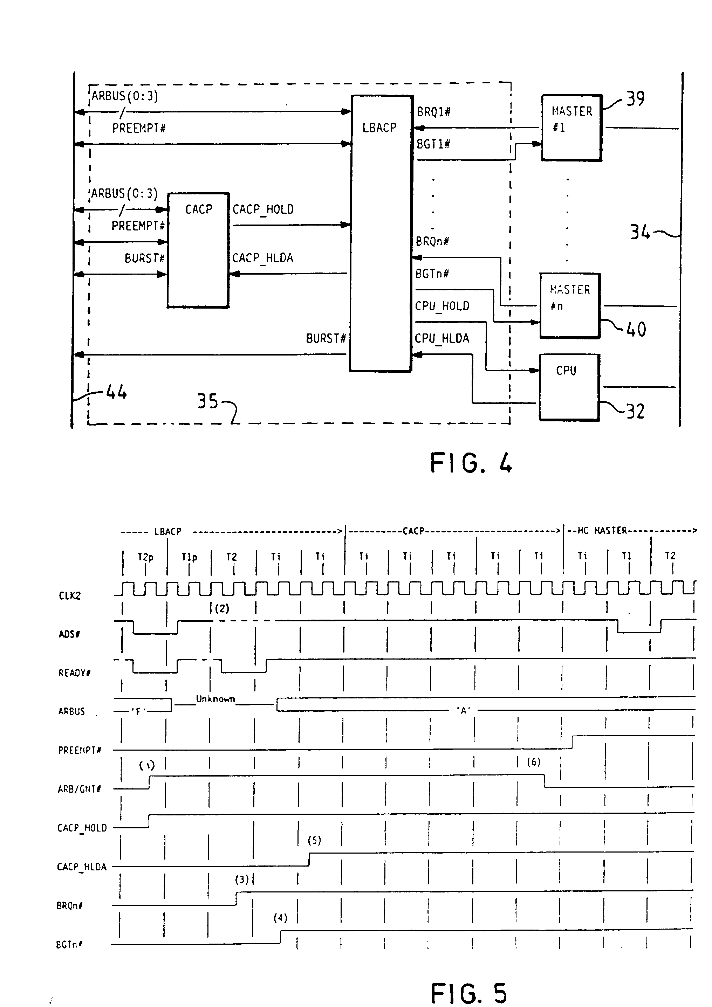

With such multiple masters, the BIC 35 functions to provide for arbitration among devices directly coupled to the input/output bus 44 for access to the input/output bus and to the local processor bus 34, and for arbitration among the input/output bus 44 and the master devices coupled directly to the local processor bus 34 for access to the local processor bus 34. This "layering" of arbitration procedures is illustrated in Figure 4, which is a schematic representation of certain BIC functions and the signal lines used in achieving those functions. As there shown, the BIC 35 functions as a central arbitration control point (CACP) for the I/O bus 44 by the exchange of certain signals with that bus (shown as ARBUS0,1,2,3; PREEMPT#; and BURST#) and also functions as a local bus arbitration control point (LBACP) by the exchange of certain signals with the CACP, the I/O bus 44 and the masters directly connected to local processor bus 34 (shown as ARBUS0,1,2,3; PREEMPT#; BURST#; BRQ1# through BRQn#; BGT1# through BGTn#; CACP_HOLD; CACP_HLDA; CPU_HOLD; and CPU_HLDA).

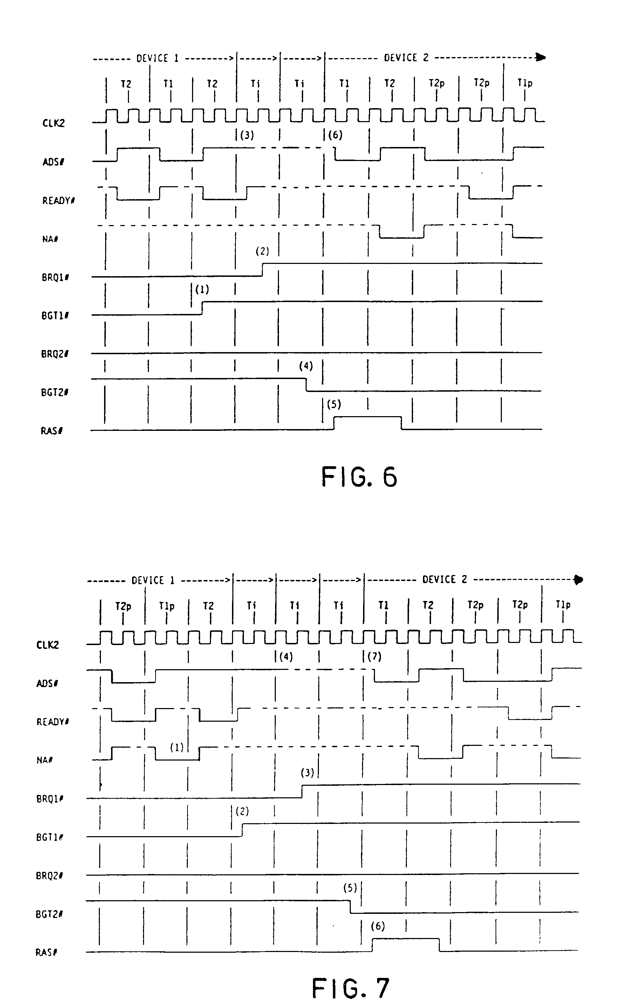

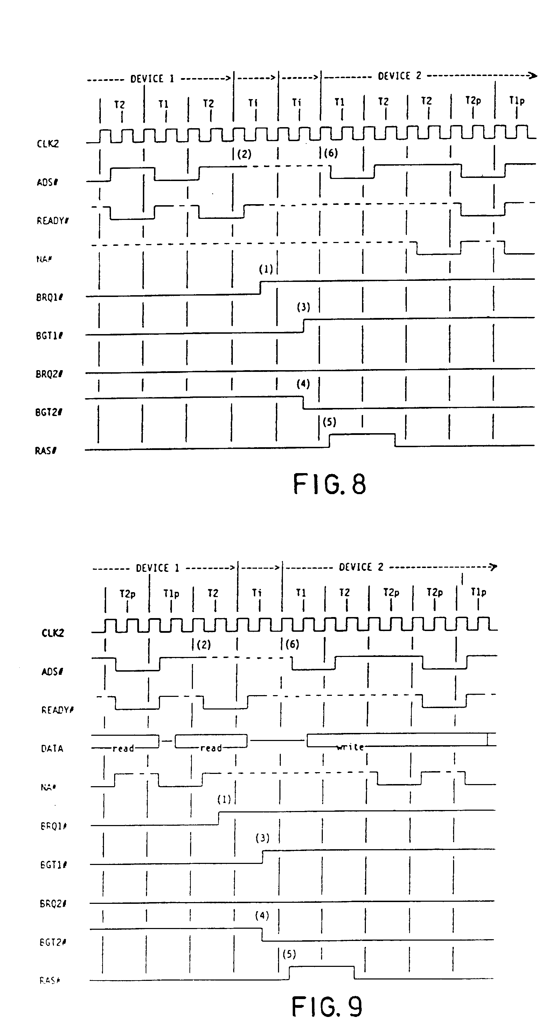

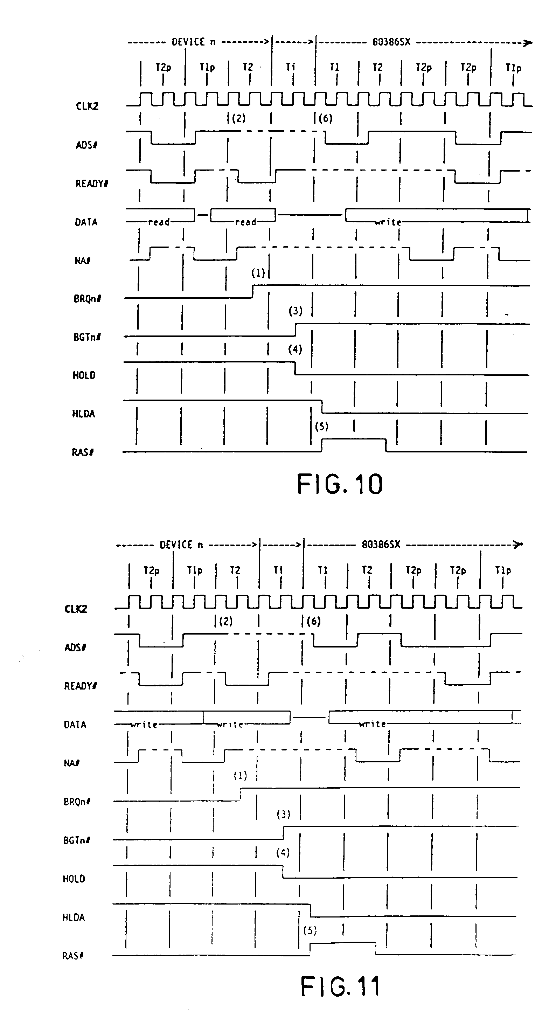

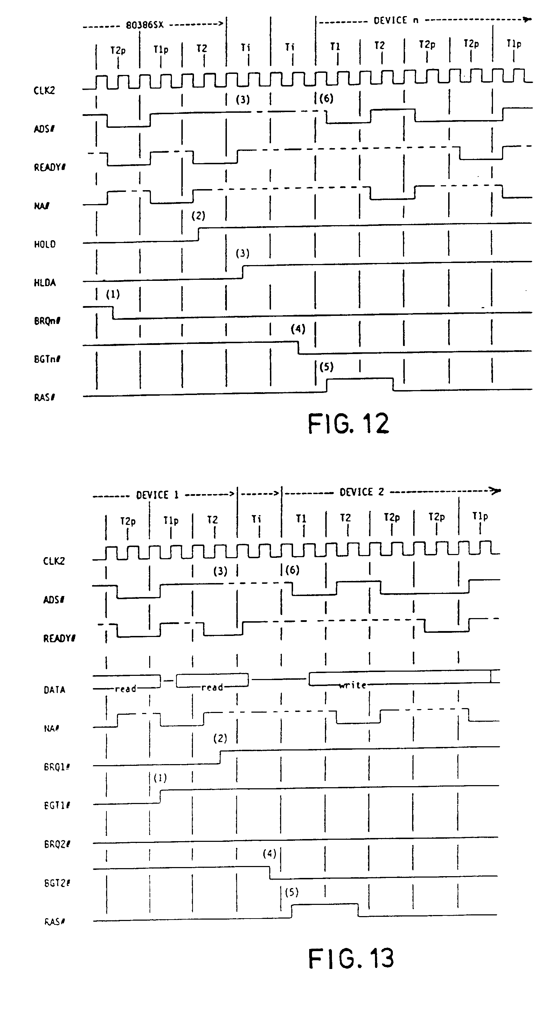

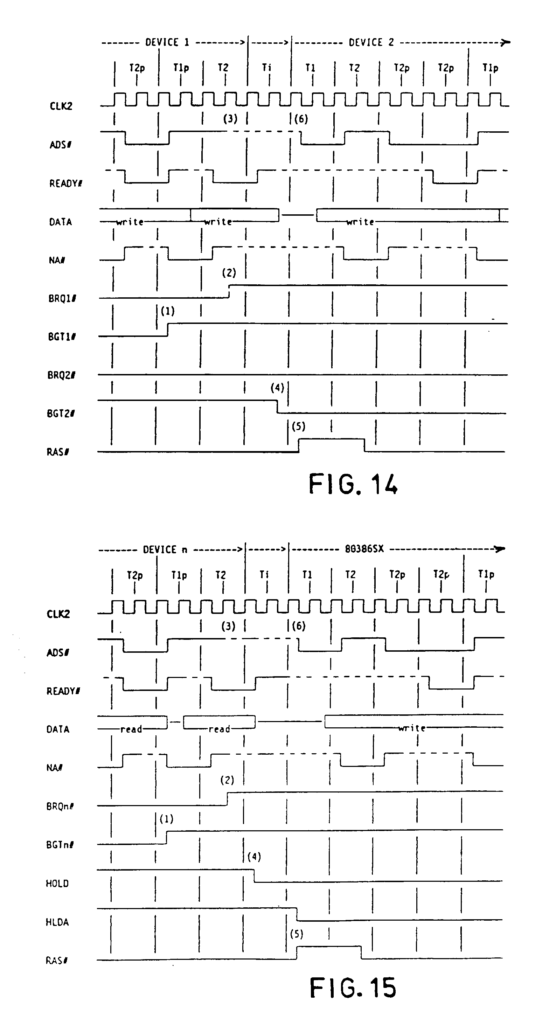

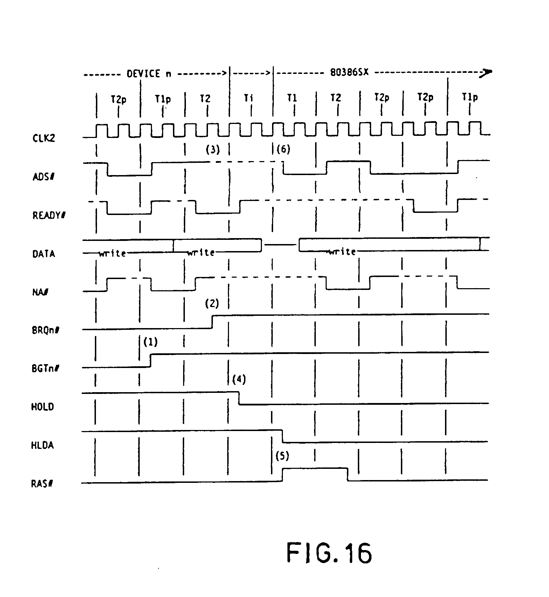

The layering of arbitration and the manner in which the BIC 35 functions in that regard will become more clear form the series of examples given in Figures 5 through 16. To briefly review the various operating sequences represented by those diagrams, Figure 5 shows the LBACP function relinquishing control to the CACP function. Figure 6 shows the LBACP function bumping or removing a device from bus access during a non-pipelined cycle. Figure 7 shows the LBACP function bumping a device during an idle state. Figure 8 shows a device giving up the local processor bus 34 during an idle state. Figure 9 shows a device which has been executing a read function giving up the bus to a second device which performs a write function. Figure 10 shows a device which has been executing a read function giving up the bus to the default master, the CPU 32. Figure 11 shows a device which has been executing a write function giving up the bus to the default master, the CPU 32. Figure 12 shows the LBACP function bumping the CPU 32 and giving the bus to another device. Figure 13 shows the LBACP function bumping a first device performing a read function and giving the bus to a second device performing a write function. Figure 14 shows the LBACP function bumping a first device which has been performing a write function and giving the bus to a second device performing a write function. Figure 15 shows the LBACP function bumping a device which has been performing a read function and giving the bus to the default master, the CPU 32. Figure 16 shows the LBACP function bumping a device which has been performing a write function and giving the bus to the default master, the CPU 32.

Each of the diagrams includes specifically identified significant points, which will be discussed hereinafter.

At this point, it will be noted that the BIC 35 and each local bus 34 master (CPU 32, MCPU 39, SCSI 40 in the illustrated embodiment) are connected by two signals dedicated to bus arbitration, namely signals BRQn# and BGTn# (the lower case letter "n" to be replaced by a digit identifying a specific master). BRQn# is an output from the master to the LBACP function of BIC 35 indicating a request for control of the local bus 34. BRQn# is an active LOW signal. The masters will drive the corresponding BRQn# active and await assertion of BGTn# before driving the local bus 34. A winning local bus master will take BRQn# inactive when BGTn# is sampled inactive or when it has finished using the bus. Taking BRQn# inactive serves as an indication that the address bus and bus cycle definition signals are being placed in a high impedance state.

BGTn# is an output from the LBACP function of the BIC 35 to the master indicating that the master has been granted control of the local bus 34. BGTn# is an active LOW signal. This signal will be held active by the LBACP until BRQn# is driven inactive or another bus request is received by the LBACP. If BGTn# is taken inactive by the LBACP, the current local bus master will release the bus (driving BRQn# inactive) as soon as the current transfer is completed. The LBACP will not drive BGTn# active for the next local bus request pending until the previous master has driven BRQn# inactive and it has completed the last transfer.

A priority and simple rotational fairness scheme are implemented in the LBACP, with local bus devices being ranked by assignment of priority numbers from highest priority (identified as device "1") to lowest priority (identified as device "n" where the letter represents the highest number provided for in the functional design). Due to the possibility of a higher priority device precluding a lower priority device from winning the bus, the pendency of bus access requests will cause the LBACP to put any winning master into an inactive state after it finishes data transfer and not grant the bus to that device until after all other requestors have received bus service.

When an input/output bus device (such as the I/O controller 58, digital signal processor 51 or video signal processor 46) controls the input/output bus 44 and requests are pending on the local bus 34, the LBACP will compete on behalf of the local bus masters in I/O bus arbitration cycles performed by the CACP function. The LBACP function may have a different arbitration level assigned for each master, recognizing the priorities assigned as described above. If any assigned arbitration level wins at the I/O bus level, then the LBACP function will drive BURST# active and allocate control of the bus among all local processor bus masters that have pending requests.

The LBACP function interfaces with the CACP function and the CPU 32 through signals identified in Figure 4 as CACP_HOLD; CACP_HLDA; CPU_HOLD; and CPU_HLDA. In prior personal computer systems, the latter two signals have been exchanged directly between a CACP function and the CPU. The interaction of the two level arbitration contemplated by this invention becomes more clear from a more detailed study of Figures 5 through 16. In each of the diagrams of Figure 5 through 16, the passage of time is indicated by the clock cycles on the line CLK2.

In Figure 5, six particular timing points are identified. At a first point (1), a device coupled directly to the I/O bus 44 exercises a preempt for the high speed, local processor bus 34. At some unknown interval later, at a second point (2), a local processor bus master which has been using the high speed bus places certain signals in a high impedance state. With a transfer complete, the device indicates that it is ready to release the bus at a third point (3), after which the LBACP function bars further access to the bus at a fourth point (4), confirms that the default master CPU 32 is in a hold state and, at a fifth point (5), releases the CACP function to grant access to the bus at a sixth point (6). This sequence relinquishes control from the LBACP to the CACP function.

A change in local processor bus masters is illustrated in Figure 6, where the sequence illustrates the LBACP withdrawing a grant of access at a first point (1), and the affected master relinquishing the bus at a second point (2) and placing certain signals in a high impedance state at a third point (3). The LBACP function then makes a grant of access at a fourth point (4), memory control logic detects a change in masters and inactivates RAS# at a fifth point (5), and the next master granted access captures the bus at a sixth point (6).

In Figure 7, the LBACP function bumps a device during an idle state. At a first point (1), a local bus slave requests pipelining, and the current local bus master is unable to supply the next address. At a second point (2), the LBACP function takes BGT1# inactive during an idle state on the bus, after which the first device removes BRQ1# at a third point (3) and places certain signals in a high impedance state at a fourth point (4). At a fifth point (5), the LBACP function indicates another device to access the bus by taking BGT2# active, after which the memory control logic detects a change in masters and inactivates RAS# at a sixth point (6). The second device detects BGT2# asserted and assumes access to the bus at a seventh point (7).

The sequence of Figure 8 results in one device relinquishing the bus during an idle state. The first device removes BRQ1# at a first point (1), indicating that it is giving up the bus, and places certain signals in high impedance states at a second point (2). The LBACP function then takes BGT1# inactive at a third point (3) and BGT2# active at a fourth point (4), whereupon the memory control logic detects a change in masters and inactivates RAS# at a fifth point (5). The second master detects BGT2# asserted and accesses the bus at a sixth point (6).

A device which has been performing a read function relinquishes the bus to a device to perform a write function in the sequence of Figure 9. The first device, responding to NA# removes BRQ1# at a first point (1), indicating that it is ready to relinquish the bus, and places certain signals in high impedance state at a second point (2). The LBACP function then takes BGT1# inactive at a third point (3) and BGT2# active at a fourth point (4), whereupon the memory control logic detects a change in masters and inactivates RAS# at a fifth point (5). The second master detects BGT2# asserted and accesses the bus at a sixth point (6).

A device which has been performing a read function relinquishes the bus to the default master CPU in the sequence of Figure 10. The device, responding to NA# removes BRQn# at a first point (1), indicating that it is ready to relinquish the bus, and places certain signals in high impedance state at a second point (2). The LBACP function then takes BGTn# inactive at a third point (3) and HOLD inactive at a fourth point (4), whereupon the memory control logic detects a change in masters and inactivates RAS# at a fifth point (5). The default master detects HOLD inactive and takes control of the bus at a sixth point (6).

A device which has been performing a write function relinquishes the bus to the default master CPU in the sequence of Figure 11. The device, responding to NA# removes BRQn# at a first point (1), indicating that it is ready to relinquish the bus, and places certain signals in high impedance state at a second point (2). The LBACP function then takes BGTn# inactive at a third point (3) and HOLD inactive at a fourth point (4), whereupon the memory control logic detects a change in masters and inactivates RAS# at a fifth point (5). The default master detects HOLD inactive and takes control of the bus at a sixth point (6).

The LBACP function detects a request for bus access and bumps the default master CPU in the sequence of Figure 12, where a device activates BRQn# at a first point (1). The LBACP function detects BRQn# active and activates HOLD at a second point (2). The CPU returns HLDA and turns off its output drivers at a third point (3). The LBACP detects HLDA at a fourth point (4) and activates BGTn#, whereupon the memory control logic detects a change in masters and inactivates RAS# at a fifth point (5) if RAS# is then active. The device then detects BGTn# active and accesses the bus.

A device which has been performing a read function is bumped from the bus and the bus given to a device to perform a write function in the sequence of Figure 13. The LBACP function takes BGT1# inactive at a first point (1). The first device, responding to NA#, then removes BRQ1# at a second point (2), indicating that it is ready to relinquish the bus, and places certain signals in high impedance state at a third point (3). The LBACP function then takes BGT2# active at a fourth point (4), whereupon the memory control logic detects a change in masters and inactivates RAS# at a fifth point (5). The second master detects BGT2# asserted and accesses the bus at a sixth point (6).

A device which has been performing a write function is bumped from the bus and the bus given to a second device to perform a write function in the sequence of Figure 14. The LBACP function takes BGT1# inactive at a first point (1). The first device, responding to NA#, then removes BRQ1# at a second point (2), indicating that it is ready to relinquish the bus, and places certain signals in high impedance state at a third point (3). The LBACP function then takes BGT2# active at a fourth point (4), whereupon the memory control logic detects a change in masters and inactivates RAS# at a fifth point (5). The second master detects BGT2# asserted and accesses the bus at a sixth point (6).

A device which has been performing a read function is bumped from the bus and the bus given to the default master CPU in the sequence of Figure 15. The LBACP function takes BGT1# inactive at a first point (1). The first device, responding to NA#, then removes BRQ1# at a second point (2), indicating that it is ready to relinquish the bus, and places certain signals in high impedance state at a third point (3). The LBACP function then takes HOLD inactive at a fourth point (4), whereupon the memory control logic detects a change in masters and inactivates RAS# at a fifth point (5). The default master detects HOLD inactive and takes control of the bus at a sixth point (6).

In the sequence of Figure 16, the LBACP function bumps a device performing a write function and transfers the bus to the default master CPU. The LBACP function takes BGT1# inactive at a first point (1). The first device, responding to NA#, then removes BRQ1# at a second point (2), indicating that it is ready to relinquish the bus, and places certain signals in high impedance state at a third point (3). The LBACP function then takes HOLD inactive at a fourth point (4), whereupon the memory control logic detects a change in masters and inactivates RAS# at a fifth point (5). The default master detects HOLD inactive and takes control of the bus at a sixth point (6).

## Claims

1. A personal computer system comprising:
a high speed data bus (34);
an input/output data bus (44);
at least two master devices (32,39,40) coupled directly to said high speed bus; and
a bus interface controller (35) coupled directly to said high speed bus and directly to said input/output data bus for providing communications between said high speed bus and said input/output data bus; characterised in that said bus interface controller provides for arbitration among said master devices coupled directly to said high speed bus for access to said high speed bus, and provides for arbitration among said high speed bus and any devices (46,51,53) coupled directly to said input/output data bus for access to said input/output data bus.

2. A personal computer according to Claim 1 wherein said bus interface controller (35) defines a local bus arbitration control point through which said master devices arbitrate for access to said high speed bus (34) and defines a central arbitration control point through which any devices coupled directly to said input/output data bus (46,51,58) arbitrate for access to said input/output data bus (44), and further wherein each of said master devices (32,39,40) signals to said bus interface controller a request for control of said high speed bus and said bus interface controller signals to each of said master devices any grant of a signalled request for control of said high speed bus.

3. A personal computer according to Claim 2 wherein said bus interface controller (35) ranks said master devices (32,39,40) in priority order for signalling a grant of control.

4. A personal computer according to Claim 3 wherein said bus interface controller (35) rotates priority among said master devices (32,39,40) and assigns lowest priority among a plurality of master devices each signalling a request for bus access to that master device which has most recently obtained control of the high speed bus.

5. A personal computer according to Claim 1 wherein said bus interface controller (35) defines a local bus arbitration control point through which said master devices (32,39,40) arbitrate for access to said high speed bus (34) and defines a central arbitration control point through which any devices (46,51,58) coupled directly to said input/output data bus (44) arbitrate for access to said input/output data bus, and further wherein one of said master devices is a default master normally controlling said high speed bus, both of said control points exchange with said input/output bus signals indicative of input/output bus arbitration, preemption and burst data transfer, said control points exchange with one another signals indicative of a hold on arbitration by said central arbitration control point and of acknowledgement of such a hold, and said local bus arbitration control point exchanges with said default master signals indicative of a hold on access by said default master and of acknowledgement of such a hold.

6. A personal computer system according to claim 1 wherein there is provided:
a microprocessor (32) coupled directly to said high speed data bus (34);
volatile memory (36) coupled directly to said high speed data bus for volatile storage of data;
storage memory devices (41) for nonvolatile storage of data;
a storage controller (40) coupled directly to said high speed data bus and to said storage memory devices for regulating communications with said storage memory devices; and
the bus interface controller (35) provides for arbitration among said microprocessor and said storage controller coupled directly to said high speed data bus for access to said high speed data bus, and provides for arbitration among any devices coupled directly to said input/output data bus (44) and said high speed data bus for access to said input/output data bus.

7. A personal computer according to Claim 6 wherein said bus interface controller (35) defines a local bus arbitration control point through which said microprocessor (32) and said storage controller (40) arbitrate for access to said local processor bus (34) and defines a central arbitration control point through which any devices coupled directly to said input/output data bus (44) arbitrate for access to said input/output data bus, and further wherein each of said microprocessor and said storage controller signals to said bus interface controller a request for control of said local processor bus and said bus interface controller signals to each of said microprocessor and said storage controller any grant of a signalled request for control of said local processor bus.

8. A personal computer according to Claim 7 wherein said bus interface controller (35) ranks said microprocessor (32) and said storage controller (40) in priority order for signalling a grant of control.

9. A personal computer according to Claim 8 wherein said bus interface controller (35) rotates priority among said microprocessor (32) and said storage controller (40) and assigns lowest priority between the two of said microprocessor and said storage controller each signalling a request for bus access to that one which has most recently obtained control of the local processor bus (34).

10. A personal computer according to Claim 6 wherein said bus interface controller (35) defines a local bus arbitration control point through which said microprocessor (32) and said storage controller (40) arbitrate for access to said local processor bus (34) and defines a central arbitration control point through which any devices (46,51,58) coupled directly to said input/output data bus (44) arbitrate for access to said input/output data bus, and further wherein said microprocessor is a default master normally controlling said local processor bus, both of said control points exchange with said input/output bus signals indicative of input/output bus arbitration, preemption and burst data transfer, said control points exchange with one another signals indicative of a hold on arbitration by said central arbitration control point and of acknowledgement of such a hold, and said local bus arbitration control point exchanges with said microprocessor signals indicative of a hold on access by said microprocessor and of acknowledgement of such a hold.

11. A personal computer system as claimed in claim 1 further comprising:
volatile memory (36) coupled directly to said high speed data bus (34) for volatile storage of data;
storage memory devices (41) for nonvolatile storage of data; and wherein
said at least two master devices comprise
a microprocessor (32),
a numeric co-processor (39) and
a storage controller (40) coupled to said storage memory devices for regulating communications with said storage memory devices; and
said devices coupled directly to said input-output data bus (44) comprise
an input/output controller (58),
a digital signal processor (51),
a video signal processor (46).

12. A personal computer according to Claim 11 wherein said bus interface controller (35) defines a local bus arbitration control point through which said microprocessor (32) and said storage controller (40) arbitrate for access to said local processor bus and defines a central arbitration control point through which said input/output controller (58) and said digital signal processor (51) and said video signal processor (46) arbitrate for access to said input/output data bus (44), and further wherein each of said microprocessor and said storage controller signals to said bus interface controller a request for control of said local processor bus and said bus interface controller signals to each of said microprocessor and said storage controller and said numeric co-processor any grant of a signalled request for control of said local processor bus.

13. A personal computer according to Claim 12 wherein said bus interface controller (35) ranks said microprocessor (32) and said storage controller (40) and said numeric co-processor (39) in priority order for signalling a grant of control.

14. A personal computer according to Claim 13 wherein said bus interface controller (35) rotates priority among said microprocessor (32) and said storage controller (40) and said numeric co-processor (39) and assigns lowest priority among the three of said microprocessor and said storage controller and said numeric co-processor each signalling a request for bus access to that one which has most recently obtained control of the local processor bus.

15. A personal computer according to Claim 11 wherein said bus interface controller (35) defines a local bus arbitration control point through which said microprocessor (32) and said storage controller (40) and said numeric co-processor (39) arbitrate for access to said local processor bus (34) and defines a central arbitration control point through which said input/output controller (58) and said digital signal processor (51) and said video signal processor (46) arbitrate for access to said input/output data bus (44), and further wherein said microprocessor is a default master normally controlling said local processor bus, both of said control points exchange with said input/output bus signals indicative of input/output bus arbitration, preemption and burst data transfer, said control points exchange with one another signals indicative of a hold on arbitration by said central arbitration control point and of acknowledgement of such a hold, and said local bus arbitration control point exchanges with said microprocessor signals indicative of a hold on access by said microprocessor and of acknowledgement of such a hold.

## Patentansprüche

1. Personalcomputersystem umfassend:
einen Hochgeschwindigkeits-Datenbus (34);
einen Ein-/Ausgabe-Datenbus (44);
mindestens zwei Mastereinheiten (32, 39, 40), die direkt an den Hochgeschwindigkeitsbus angeschlossen sind; und
eine Busschnittstellen-Steuereinheit (35), die sowohl direkt an den Hochgeschwindigkeitsbus als auch direkt an den Ein-/Ausgabe-Datenbus angeschlossen ist, um Datenübertragungen zwischen dem Hochgeschwindigkeitsbus und dem Ein-/Ausgabe-Datenbus bereitzustellen; dadurch gekennzeichnet, daß die Busschnittstellen-Steuereinheit bezüglich des Zugriffs auf den Hochgeschwindigkeitsbus eine Prioritätsentscheidung zwischen den Mastereinheiten, die direkt an den Hochgeschwindigkeitsbus angeschlossen sind, trifft, und daß sie bezüglich des Zugriffs auf den Ein-/Ausgabe-Datenbus eine Prioritätsentscheidung zwischen dem Hochgeschwindigkeitsbus und all den Geräten (46, 51, 58) trifft, die direkt an den Ein-/Ausgabe-Datenbus angeschlossen sind.

2. Personalcomputer gemäß Anspruch 1, wobei die Busschnittstellen-Steuereinheit (35) eine lokale Buszuteilungs-Steuereinheit bildet, über die den Mastereinheiten der Zugriff auf den Hochgeschwindigkeitsbus (34) freigegeben wird, sowie eine zentrale Buszuteilungs-Steuereinheit, über die allen direkt an den Ein-/Ausgabe-Datenbus angeschlossenen Geräten (46, 51, 58) der Zugriff auf den Ein-/Ausgabe-Datenbus (44) freigegeben wird, und wobei jede der Mastereinheiten (32, 39, 40) eine Anforderung nach Übernahme der Steuerung über den Hochgeschwindigkeitsbus an die Busschnittstellen-Steuereinheit sendet, und wobei die Busschnittstellen-Steuereinheit jede Gewährung einer signalisierten Anforderung nach Übernahme der Steuerung über den Hochgeschwindigkeitsbus allen Mastereinheiten anzeigt.

3. Personalcomputer gemäß Anspruch 2, wobei die Busschnittstellen-Steuereinheit (35) zur Signalisierung einer Buszuteilung eine Prioritätsreihenfolge zwischen den Mastereinheiten (32, 39, 40) aufstellt.

4. Personalcomputer gemäß Anspruch 3, wobei die Busschnittstellen-Steuereinheit (35) die Prioritätsreihenfolge zwischen den Mastereinheiten (32, 39, 40) rotieren läßt und innerhalb einer Vielzahl von Mastereinheiten, die alle eine Anforderung für einen Buszugriff signalisieren, die niedrigste Priorität der Mastereinheit zuweist, welche zuletzt die Steuerung des Hochgeschwindigkeitsbusses erhalten hatte.

5. Personalcomputer gemäß Anspruch 1, wobei die Busschnittstellen-Steuereinheit (35) eine lokale Buszuteilungs-Steuereinheit bildet, über die den Mastereinheiten der Zugriff auf den Hochgeschwindigkeitsbus (34) freigegeben wird, sowie eine zentrale Buszuteilungs-Steuereinheit, über die allen direkt an den Ein-/Ausgabe-Datenbus angeschlossenen Geräten (46, 51, 58) der Zugriff auf den Ein-/Ausgabe-Datenbus (44) freigegeben wird, und wobei desweiteren eine der Mastereinheiten standardmäßig ein Busmaster ist, der normalerweise den Hochgeschwindigkeitsbus steuert, wobei beide Buszuteilungs-Steuereinheiten die Ein-/Ausgabe-Bussignale verarbeiten und beeinflussen, die die Buszyklen Prioritätsentscheidung, Busbelegung und Paketdatenübertragung anzeigen, und wobei die beiden Buszuteilungs-Steuereinheiten untereinander Signale austauschen, die ein Anhalten der Prioritätsentscheidungszyklen durch die zentrale Buszuteilungs-Steuereinheit und eine Bestätigung des Anhaltens anzeigen, und wobei die lokale Buszuteilungs-Steuereinheit mit dem standardmäßigen Busmaster Signale austauscht, die ein Anhalten des Buszugriffs durch den standardmäßigen Busmaster sowie eine Bestätigung des Anhalten anzeigen.

6. Personalcomputersystem gemäß Anspruch 1, wobei bereitgestellt werden:
ein Mikroprozessor (32), der direkt an den Hochgeschwindigkeits-Datenbus (34) angeschlossen ist;
ein flüchtiger Speicher (36), der zum flüchtigen Speichern von Daten direkt an den Hochgeschwindigkeits-Datenbus angeschlossen ist;
eine Speichereinheit (41) zum nichtflüchtigen Speichern von Daten;
eine Speichersteuereinheit (40), die direkt an den Hochgeschwindigkeits-Datenbus und an die Speichereinheiten angeschlossen ist, um die Datenübertragung mit den Speichereinheiten zu regeln; und
wobei die Busschnittstellen-Steuereinheit (35) bezüglich des Zugriffs auf den Hochgeschwindigkeitsbus eine Prioritätsentscheidung zwischen dem Mikroprozessor und der Speichersteuereinheit, die beide direkt an den Hochgeschwindigkeits-Datenbus angeschlossen sind, vornimmt, sowie eine Prioritätsentscheidung bezüglich des Zugriffs auf den Ein-/Ausgabe-Datenbus zwischen allen Geräten, die direkt an den Ein-/Ausgabe-Datenbus (44) angeschlossen sind, und dem Hochgeschwindigkeits-Datenbus.

7. Personalcomputer gemäß Anspruch 6, wobei die Busschnittstellen-Steuereinheit (35) eine lokale Buszuteilungs-Steuereinheit bildet, über die dem Mikroprozessor (32) und der Speichersteuereinheit (40) der Zugriff auf den lokalen Prozessorbus (34) freigegeben wird, sowie eine zentrale Buszuteilungs-Steuereinheit, über die allen direkt an den Ein-/Ausgabe-Datenbus angeschlossenen Geräten der Zugriff auf den Ein-/Ausgabe-Datenbus (44) freigegeben wird, und wobei weiterhin sowohl der Mikroprozessor als auch die Speichersteuereinheit eine Anforderung nach Übernahme der Steuerung über den lokalen Prozessorbus an die Busschnittstellen-Steuereinheit senden, und wobei die Busschnittstellen-Steuereinheit jede Gewährung einer signalisierten Anforderung nach Übernahme der Steuerung über den Hochgeschwindigkeitsbus sowohl dem Mikroprozessor als auch der Speichersteuereinheit anzeigt.

8. Personalcomputer gemäß Anspruch 7, wobei die Busschnittstellen-Steuereinheit (35) zur Signalisierung einer Buszuteilung eine Prioritätsreihenfolge zwischen dem Mikroprozessor (32) und der Speichersteuereinheit (40) aufstellt.

9. Personalcomputer gemäß Anspruch 8, wobei die Busschnittstellen-Steuereinheit (35) die Prioritätsreihenfolge zwischen dem Mikroprozessor (32) und der Speichersteuereinheit (40) rotieren läßt und zwischen den beiden Einheiten, dem Mikroprozessor (32) und der Speichersteuereinheit (40), die beide eine Anforderung für einen Buszugriff signalisieren, die niedrigste Priorität der Einheit zuweist, welche zuletzt die Steuerung des lokalen Prozessorbusses erhalten hatte.

10. Personalcomputer gemäß Anspruch 9, wobei die Busschnittstellen-Steuereinheit (35) eine lokale Buszuteilungs-Steuereinheit bildet, über die dem Mikroprozessor (32) und der Speichersteuereinheit (40) der Zugriff auf den lokalen Prozessorbus (34) freigegeben wird, sowie eine zentrale Buszuteilungs-Steuereinheit, über die allen direkt an den Ein-/Ausgabe-Datenbus (44) angeschlossenen Geräten (46, 51, 58) der Zugriff auf den Ein-/Ausgabe-Datenbus freigegeben wird, und wobei desweiteren der Mikroprozessor standardmäßig ein Busmaster ist, der normalerweise den lokalen Prozessorbus steuert, wobei beide Buszuteilungs-Steuereinheiten die Ein-/Ausgabe-Bussignale verarbeiten und beeinflussen, die die Buszyklen Prioritätsentscheidung, Busbelegung und Paketdatenübertragung anzeigen, und wobei die beiden Buszuteilungs-Steuereinheiten untereinander Signale austauschen, die ein Anhalten der Prioritätsentscheidungszyklen durch die zentrale Buszuteilungs-Steuereinheit und eine Bestätigung des Anhaltens anzeigen, und wobei die lokale Buszuteilungs-Steuereinheit mit dem Mikroprozessor Signale austauscht, die ein Anhalten des Buszugriffs durch den Mikroprozessor sowie eine Bestätigung des Anhaltens anzeigen.

11. Personalcomputersystem gemäß Anspruch 1, desweiteren umfassend:
einen flüchtigen Speicher (36), der zum flüchtigen Speichern von Daten direkt an den Hochgeschwindigkeits-Datenbus (34) angeschlossen ist;
eine Speichereinheit (41) zum nichtflüchtigen Speichern von Daten; und wobei
die mindestens zwei Mastereinheiten umfassen:
einen Mikroprozessor (32),
einen numerischen Coprozessor (34) und
eine Speichersteuereinheit (40), die an die Speichereinheiten angeschlossen ist, um die Datenübertragung mit den Speichereinheiten zu regeln; und
wobei die Geräte, die direkt an den Ein-/Ausgabe-Datenbus (44) angeschlossen sind, umfassen:
eine Ein-/Ausgabe-Steuereinheit (58),
einen digitalen Signalprozessor (51) und
einen Videosignalprozessor (46).

12. Personalcomputer gemäß Anspruch 11, wobei die Busschnittstellen-Steuereinheit (35) eine lokale Buszuteilungs-Steuereinheit bildet, über die dem Mikroprozessor (32) und der Speichersteuereinheit (40) der Zugriff auf den lokalen Prozessorbus (34) freigegeben wird, sowie eine zentrale Buszuteilungs-Steuereinheit, über die der Ein-/Ausgabe-Steuereinheit (58), dem digitalen Signalprozessor (51) und dem Videosignalprozessor (46) der Zugriff auf den Ein-/Ausgabe-Datenbus (44) freigegeben wird, und wobei weiterhin sowohl der Mikroprozessor als auch die Speichersteuereinheit eine Anforderung nach Übernahme der Steuerung über den lokalen Prozessorbus an die Busschnittstellen-Steuereinheit senden, und wobei die Busschnittstellen-Steuereinheit jede Gewährung einer signalisierten Anforderung nach Übernahme der Steuerung über den Hochgeschwindigkeitsbus sowohl dem Mikroprozessor als auch der Speichersteuereinheit und dem numerischen Coprozessor anzeigt.

13. Personalcomputer gemäß Anspruch 12, wobei die Busschnittstellen-Steuereinheit (35) zur Signalisierung einer Buszuteilung eine Prioritätsreihenfolge zwischen dem Mikroprozessor (32) und der Speichersteuereinheit (40) und dem numerischen Coprozessor (39) aufstellt.

14. Personalcomputer gemäß Anspruch 13, wobei die Busschnittstellen-Steuereinheit (35) die Prioritätsreihenfolge zwischen dem Mikroprozessor (32) und der Speichersteuereinheit (40) und dem numerischen Coprozessor (39) rotieren läßt und unter den drei Einheiten, dem Mikroprozessor (32) und der Speichersteuereinheit (40) und dem numerischen Coprozessor (39), die alle eine Anforderung für einen Buszugriff signalisieren, die niedrigste Priorität der Einheit zuweist, welche zuletzt die Steuerung des lokalen Prozessorbusses erhalten hatte.

15. Personalcomputer gemäß Anspruch 11, wobei die Busschnittstellen-Steuereinheit (35) eine lokale Buszuteilungs-Steuereinheit bildet, über die dem Mikroprozessor (32) und der Speichersteuereinheit (40) dem numerischen Coprozessor (39) der Zugriff auf den lokalen Prozessorbus (34) freigegeben wird, sowie eine zentrale Buszuteilungs-Steuereinheit, über die der Ein-/Ausgabe-Steuereinheit (58) und dem digitalen Signalprozessor (51) und dem Videosignalprozessor (46) der Zugriff auf den Ein-/Ausgabe-Datenbus (44) freigegeben wird, und wobei desweiteren der Mikroprozessor standardmäßig ein Busmaster ist, der normalerweise den lokalen Prozessorbus steuert, wobei beide Buszuteilungs-Steuereinheiten die Ein-/Ausgabe-Bussignale verarbeiten und beeinflussen, die die Buszyklen Prioritätsentscheidung, Busbelegung und Paketdatenübertragung anzeigen, und wobei die beiden Buszuteilungs-Steuereinheiten untereinander Signale austauschen, die ein Anhalten der Prioritätsentscheidungszyklen durch die zentrale Buszuteilungs-Steuereinheit und eine Bestätigung des Anhaltens anzeigen, und wobei die lokale Buszuteilungs-Steuereinheit mit dem Mikroprozessor Signale austauscht, die ein Anhalten des Buszugriffs durch den Mikroprozessor sowie eine Bestätigung des Anhaltens anzeigen.

## Revendications

1. Un système d'ordinateur personnel comprenant :
un bus de données à haute vitesse (34);
un bus de données entrée/sortie (44);
au moins deux dispositifs maîtres (32, 39, 40), couplés directement audit bus à haute vitesse; et
un contrôleur d'interface de bus (35) couplé directement audit bus à haute vitesse et directement audit bus de données entrée/sortie, pour établir des communications entre ledit bus à haute vitesse et ledit bus de données entrée/sortie, caractérisé en ce que ledit contrôleur d'interface de bus procède à un arbitrage parmi lesdits dispositifs maîtres qui sont couplés directement audit bus à haute vitesse concernant l'accès audit bus à haute vitesse, et établit un arbitrage parmi ledit bus à haute vitesse et les éventuels dispositifs (46, 31, 53) couplés directement audit bus de données entrée/sortie, pour l'accès audit bus de données entrée/sortie.

2. Un ordinateur personnel selon la revendication 1, dans lequel ledit contrôleur d'interface de bus (5) définit un point de contrôle d'arbitrage de bus local par lequel lesdits dispositifs maîtres procèdent à un arbitrage concernant l'accès audit bus à haute vitesse (34) et définit un point de contrôle d'arbitrage central par lequel les éventuels dispositifs couplés directement audit bus de données entrée/sortie (46, 51, 58) procèdent à un arbitrage concernant l'accès audit bus de données entrée/sortie (44) et, en outre, dans lequel chacun desdits dispositifs maîtres (32, 39, 40) signale audit contrôleur d'interface de bus la présence d'une requête concernant le contrôle dudit bus à haute vitesse, et ledit contrôleur d'interface de bus signalant à chacun desdits dispositifs maîtres toute exécution éventuelle d'une requête signalée concernant le contrôle dudit bus à haute vitesse.

3. Un ordinateur personnel selon la revendication 2, dans lequel ledit contrôleur d'interface de bus (35) classe lesdits dispositifs maîtres (32, 39, 40) selon un ordre de priorité, en vue de signaler l'autorisation d'un contrôle.

4. Un ordinateur personnel selon la revendication 3, dans lequel ledit contrôleur d'interface de bus (35) procède à une rotation de priorité parmi lesdits dispositifs maîtres (32, 39, 40) et affecte la priorité la plus basse parmi la pluralité des dispositifs maîtres, chacun signalant une requête d'accès de bus, au dispositif maître qui a obtenu le plus récemment le contrôle du bus à haute vitesse.

5. Un ordinateur personnel selon la revendication 3, dans lequel ledit contrôleur d'interface de bus (35) définit un point de contrôle d'arbitrage de bus local par lequel lesdits dispositifs maîtres (32, 39, 40) procèdent à un arbitrage concernant l'accès audit bus à haute vitesse (34) et définit un point de contrôle d'arbitrage central par lequel les éventuels dispositifs (46, 51, 58) couplés directement audit bus de données d'entrée/sortie (44) procèdent à un arbitrage concernant l'accès audit bus de données entrée/sortie (44), et en outre dans lequel l'un desdits dispositifs maîtres (32, 39, 40) est un maître par défaut qui, normalement, contrôle ledit bus à haute vitesse, les deux points de contrôle échangeant avec le bus d'entrée/sortie des signaux indicatifs de l'arbitrage de bus entrée/sortie, d'une préemption et d'un transfert de données par rafales, lesdits points de contrôle échangeant avec d'autres des signaux indicatifs d'un maintien en arbitrage par ledit point de contrôle d'arbitrage central et de la réception d'un tel maintien, et ledit point de contrôle d'arbitrage de bus local échangeant avec ledit maître par défaut des signaux indicatifs d'un maintien concernant l'accès par ledit maître par défaut et l'accusé de réception d'un tel maintien.

6. Un ordinateur personnel selon la revendication 1, dans lequel est prévu :
un microprocesseur (12) couplé directement audit bus de données à haute vitesse (34);
une mémoire volatile (36) couplée directement audit bus de données à haute vitesse, afin d'y procéder à un stockage volatil de données;
des dispositifs de mémoire de stockage (41) concernant le stockage non volatil de données;
un contrôleur de stockage (40) couplé directement audit bus de données à haute vitesse et auxdits dispositifs mémoire de stockage, afin de réguler les communications s'établissant avec lesdits dispositifs de mémoire de stockage; et
le contrôleur d'interface de bus (35) procédant à un arbitrage parmi ledit microprocesseur et ledit contrôleur de stockage couplé directement audit bus de données à haute vitesse, concernant l'accès directement audit bus de données à haute vitesse, et procédant à un arbitrage parmi lesdits dispositifs couplés directement audit bus de données entrée/sortie (44) et audit bus de données à haute vitesse, concernant l'accès audit bus de données entrée/sortie.

7. Un ordinateur personnel selon la revendication 6, dans lequel ledit contrôleur d'interface de bus (35) définit un point de contrôle d'arbitrage de bus local par lequel ledit microprocesseur (32) et ledit contrôleur de stockage (40) procèdent à un arbitrage concernant l'accès audit bus processeur local (34) et définit un point de contrôle d'arbitrage central par lequel les éventuels dispositifs couplés directement audit bus de données entrée/sortie (44) procèdent à un arbitrage concernant l'accès audit bus de données entrée/sortie, et dans lequel, en outre, chacun, parmi ledit microprocesseur et ledit contrôleur de stockage, signale audit contrôleur d'interface de bus une requête concernant le contrôle dudit bus de processeur local, et ledit contrôleur d'interface de bus signalant à chacun, parmi ledit microprocesseur et ledit contrôleur de stockage, l'autorisation éventuelle d'une requête signalée pour le contrôle dudit bus de processeur local.

8. Un ordinateur personnel selon la revendication 7, dans lequel ledit contrôleur d'interface de bus (35) établit un classement parmi ledit microprocesseur (32) et ledit contrôleur de stockage (40), sous un ordre de priorité, en vue de signaler l'autorisation d'un contrôle.

9. Un ordinateur personnel selon la revendication 8, dans lequel ledit contrôleur d'interface de bus (35) procède à une rotation de priorité parmi ledit microprocesseur (32) et ledit contrôleur de stockage (40) et affecte la priorité la plus basse entre les deux éléments que sont ledit microprocesseur et ledit contrôleur de stockage, chacun signalant une requête d'accès de bus, à celui qui a obtenu le plus récemment le contrôle du bus de processeur local.

10. Un ordinateur personnel selon la revendication 6, dans lequel ledit contrôleur d'interface de bus (35) définit un point de contrôle d'arbitrage de bus local par lequel ledit microprocesseur (32) et ledit contrôleur de stockage (40) procèdent à un arbitrage concernant l'accès audit bus processeur local (34) et définit un point de contrôle d'arbitrage central par lequel les éventuels dispositifs (46, 51, 58), couplés directement audit bus de données entrée/sortie (44), procèdent à un arbitrage concernant l'accès audit bus de données entrée/sortie, et en outre, dans lequel ledit microprocesseur est un maître par défaut qui, normalement, contrôle ledit bus processeur local, les deux éléments que sont lesdits points de contrôle échangeant avec ledit bus entrée/sortie des signaux indicatifs de l'arbitrage de bus entrée/sortie, de la préemption et du transfert de données par rafales, lesdits points de contrôle échangeant les uns avec les autres les signaux indicatifs d'un maintien en arbitrage par ledit point de contrôle d'arbitrage central et de l'accusé de réception d'un tel maintien, et ledit point de contrôle d'arbitrage de bus local échangeant avec ledit microprocesseur des signaux indicatifs d'un maintien d'accès par ledit microprocesseur et ladite réception d'un tel maintien.

11. Un système d'ordinateur personnel selon la revendication 1, comprenant en outre :
un coprocesseur numérique (34));
une mémoire volatile (36) couplée directement audit bus de données à haute vitesse (34), afin d'y procéder à un stockage volatil de données;
des dispositifs de mémoire de stockage (41) conçus pour procéder à un stockage non volatil de données; et dans lequel
lesdits au moins deux dispositifs maîtres comprennent un microprocesseur (32), un contrôleur de stockage (40) couplé auxdits dispositifs mémoire de stockage pour réguler les communications avec lesdits dispositifs mémoire de stockage; et
lesdits dispositifs couplés directement audit bus de données entrée/sortie (44) comprennent un contrôleur d'entrée/sortie (59);
un processeur de signal numérique (51);
un processeur de signal vidéo (46).

12. Un ordinateur personnel selon la revendication 11, dans lequel ledit contrôleur d'interface de bus (35) définit un point de contrôle d'arbitrage de bus local par lequel ledit microprocesseur (32) et ledit contrôleur de stockage (40) procèdent à un arbitrage concernant l'accès audit bus processeur local (34) et définit un point de contrôle d'arbitrage central par lequel ledit contrôleur d'entrée/sortie (58) et ledit processeur de signal numérique (51) et ledit processeur de signal vidéo (46) procèdent à un arbitrage concernant l'accès audit bus de données entrée/sortie, et en outre, dans lequel chaque élément parmi ledit microprocesseur et ledit contrôleur de stockage signale audit contrôleur d'interface de bus une requête concernant le contrôle dudit bus de processeur local, et ledit contrôleur d'interface de bus signalant à chaque élément parmi ledit microprocesseur et ledit contrôleur de stockage et ledit coprocesseur numérique toute autorisation d'une requête signalée concernant le contrôle dudit bus processeur local.

13. Un ordinateur personnel selon la revendication 12, dans lequel ledit contrôleur d'interface de bus (35) procède un classement au niveau dudit microprocesseur (32) et dudit contrôleur de stockage (40) et dudit coprocesseur numérique (39), sous un ordre de priorité, afin de signaler l'exécution d'une commande de contrôle.

14. Un ordinateur personnel selon la revendication 13, dans lequel ledit contrôleur d'interface de bus (35) procède à une rotation de priorité parmi ledit microprocesseur(32) et ledit contrôleur de stockage et ledit coprocesseur numérique (39) et affecte la priorité la plus basse parmi les trois éléments que sont ledit microprocesseur et ledit contrôleur de stockage et ledit coprocesseur numérique, signalant chacun une requête d'accès de bus à celui qui a le plus récemment obtenu le contrôle du bus processeur local.

15. Un ordinateur personnel selon la revendication 11, dans lequel ledit contrôleur d'interface de bus (35) définit un point de contrôle d'arbitrage de bus local par lequel ledit microprocesseur et ledit contrôleur de stockage (40) et ledit coprocesseur numérique (39) procèdent à un arbitrage concernant l'accès audit processeur local (34) et définit un point de contrôle d'arbitrage central par lequel ledit contrôleur d'entrée/sortie (58) et ledit processeur de signal numérique (51) et ledit processeur de signal vidéo (46) procèdent à un arbitrage concernant l'accès audit bus de données entrée/sortie (44) et, en outre, dans lequel ledit microprocesseur est un maître par défaut contrôlant normalement ledit bus processeur local, les deux éléments que sont lesdits points de contrôle échangeant avec ledit bus d'entrée/sortie des signaux indicatifs de l'arbitrage de bus entrée/sortie, de la préemption et du transfert de données par rafales, lesdits points de contrôle échangeant les uns avec les autres des signaux indicatifs d'un maintien en arbitrage par ledit point de contrôle d'arbitrage central et de l'accusé de réception d'un tel maintien, et ledit point de contrôle d'arbitrage de bus local échangeant avec ledit microprocesseur des signaux indicatifs d'un maintien en accès par ledit microprocesseur et de l'accusé de réception d'un tel maintien.
